# EUROPÄISCHE PATENTSCHRIFT

(11) **EP 1 354 515 B1**
(45) Veröffentlichungstag und Bekanntmachung des Hinweises auf die Patenterteilung: **21.11.2007**
(21) Anmeldenummer: 03090111.0
(22) Anmeldetag: 16.04.2003
(51) Int. Cl.: A01N 1/02

(54) **Konservierte Gewebematrix eines Hohlorganes, insbesondere eines Blutgefässes, Verfahren zur Herstellung und Verwendung dieser**
Preserved tissue matrix of a hollow organ, in particular a blood vessel, method for its preparation and its use
Matrice tissulaire préservée d'un organe creux, particulièrement un vaisseau sanguin, procédé pour sa préparation et utilisation

(30) Priorität: 18.04.2002 DE 10217779
(43) Veröffentlichungstag der Anmeldung: 22.10.2003
(73) Patentinhaber: Co.Don Aktiengesellschaft, 14513 Teltow (DE)
(72) Erfinder: Löwel, Matthias, 90408 Nürnberg (DE); Siodla, Vilma, 14532 Kleinmachnow (DE)
(74) Vertreter: Ziebig, Marlene

(56) Entgegenhaltungen:
- WO-A-98/49969
- WO-A-99/00152
- DE-A- 2 906 650

## Beschreibung

Die Erfindung betrifft eine konservierte, desantigenisierte, für einen Empfänger autologe, allogene oder xenogene Gewebematrix eines tierischen oder menschlichen Hohlorgans, wie z. B. eines Blutgefäßes, des Harnleiters oder der Harnblase, deren biomechanische Eigenschaften durch die Konservierung nicht bzw. nur geringfügig beeinträchtigt sind, die keine infektiösen Partikel des Spenders beinhaltet und die ausgezeichnet zur Beschichtung mit Endothel-, Epithel-, Fibroblasten- oder Muskelzellen eines Empfängers geeignet ist, um für diesen Empfänger autologe Transplantate herzustellen. Gegenstand der Erfindung sind das Verfahren zur Herstellung und die Verwendung dieser Gewebematrix sowie des daraus hergestellten autologen Transplantates und dessen Verwendung.

Im Rahmen von Operationen der Hohlorgane des Blutgefäß-, des Lymph-, des Atemwegs- und des Urogenitalsystems besteht häufig der Bedarf zum Ersatz körpereigener geschädigter Gewebe- und Organstrukturen.

Steht genügend patienteneigenes (autologes) Ersatzgewebe zur Verfügung, wie z.B. bei koronaren Bypass-Operationen, so wird der behandelnde Arzt das autologe Gewebe bevorzugt transplantieren.

Steht nicht ausreichend körpereigenes Gewebe zur Verfügung, so gibt es für den Arzt folgende Möglichkeiten:
- Verwendung so genannter biokompatibler synthetischer Implantate, die sowohl resorbierbar als auch nicht resorbierbar sein können;
- Verwendung allogener Transplantate, z.B. Herzklappen, Blutgefäße;
- Verwendung xenogener Transplantate, z.B. Herzklappen;

Die Verwendung synthetischer Implantate weist zum Teil schwere Nebenwirkungen, wie z.B. Fremdkörperreaktionen, allergische Reaktionen, mangelndes Umbauverhalten (remodelling) aber auch lebensbedrohliche Nebenwirkungen wie z.B. Thrombosen auf. Deshalb ist ihr Einsatz z.B. in der Gefäßund Herzchirurgie nur in Ausnahmefällen möglich.

Die Verwendung allogener vitaler Transplantate wird neben der möglichen Infektionsgefahr durch Abstoßungsreaktionen limitiert.

Allogene nicht vitale Transplantate (z.B. durch Kryokonservierung hergestellt) werden seit langem erfolgreich zum Ersatz geschädigter Knochen- und Bindegewebsstrukturen (z.B. Duraplastik, Hernienoperationen) eingesetzt.

Ihr Einsatz beim Ersatz von Gewebe- bzw. Organstrukturen, die eine wichtige metabolische Funktion wahrnehmen, wie z.B. Blutgefäße, ist aber limitiert. Die fehlende metabolische Aktivität der Gefäßwand führt zu Komplikationen wie z.B. Thrombosen.

Avitale xenogene Transplantate, wie z.B. chemisch modifizierte Schweineherzklappen, werden seit langem erfolgreich in der Herzchirurgie angewendet. Allerdings weisen auch sie einige Nachteile, wie z.B. Calzifizierung und mangelndes Remodelling, auf.

Aufgabe der Erfindung war es, eine konservierte Gewebematrix eines Hohlorgans bereitzustellen, deren biomechanischen Eigenschaften weitgehend die gleichen sind wie vor der Konservierung, die desantigenisiert ist, keine infektiösen Partikel des Spenders beinhaltet und die zur Beschichtung mit Endothel-, Epithel, Fibroblasten - bzw. Muskelzellen eines Empfängers geeignet ist, um zur Herstellung autologer Transplantate für diesen Empfänger zu dienen.
Aufgabe der Erfindung war es auch, ein kostengünstiges Verfahren zur Herstellung von autologen Transplantaten zu entwickeln, die in der Bauch-, Thorax-, Gefäß- oder Herzchirurgie, in der Urologie oder Gynäkologie verwendet werden können.

Die Aufgabe der Erfindung wird durch ein Verfahren zur Herstellung einer konservierten Gewebematrix eines Hohlorgans gelöst, das dadurch gekennzeichnet ist, dass eine dem menschlichen oder tierischen Körper entnommene Gewebematrix eines Hohlorganes nach gegebenenfalls mechanischer Entfernung von anhaftendem Stütz-, Binde- oder Fettgewebe einer osmotischen Behandlung durch mehrmaliges Spülen mit wässrigen Salzlösungen unterzogen wird, die Gewebematrix durch mehrmaliges Spülen mit wässrigen Wasserstoffperoxidlösungen desantigenisiert wird, die Matrix anschließend mit Lauge behandelt und neutralisiert wird, das in der Matrix vorhandene Wasser azeotrop durch mehrmaliges Spülen mit einem organischen, mit Wasser mischbaren Lösungsmittel entfernt wird und die dann Lösungsmittel enthaltende Matrix getrocknet wird.

Im Sinne der Erfindung wird als Gewebematrix eines Hohlorganes vorzugsweise das röhrenförmige Gewebestück eines Blutgefäßes, z.B. ein Stück einer Arterie, Vene oder eines Lymphgefäßes verstanden. Erfindungsgemäß können jedoch auch Harnleiter, Harnblasen , Luftröhren, Bronchien, Gewebe der Magen- und der Darmwand eingesetzt werden. Die Erfindung betrifft alle Gewebe, die eine wichtige metabolische Funktion wahrnehmen, wie z.B. Blutgefäße, und die sowohl Kollagen als auch Elastin und Muskelzellen beinhalten.

Erfindungsgemäß wird das entnommene Gewebe - gegebenenfalls nach vorheriger Entfernung von anhaftendem Stütz-, Bindeoder Fettgewebe, mehrmals mit wässrigen Salzlösungen gespült und gegebenenfalls über Nacht darin gelagert, um die in der Matrix enthaltenen Spenderzellen osmotisch zu zerstören. Dazu werden 5-15%ige Salzlösungen verwendet. Als Salze kommen Natriumchlorid, Natriumphosphat, Natriumsulfat, Natriumhydrogenphosphat, Natriumhydrogensulfat, Natriumcitrat, in Frage. Vorzugsweise wird Natriumchlorid verwendet.
Darauf folgt eine Desantigenisierung durch Spülen mit wässrigen Wasserstoffperoxidlösungen. Gegebenenfalls folgt eine Lagerung in einer H₂O₂-Lösung. Vorzugsweise sind diese 3-10%ig. Es wurde festgestellt, dass durch die Verwendung von H₂O₂ eine Reduzierung des DNA-Gehaltes der Gewebematrix bis zu 50 % erfolgt

Anschließend wird die Gewebematrix erfindungsgemäß mit Lauge behandelt, vorzugsweise mit NaOH oder KOH. Bevorzugt wird 0,1-1N Lauge eingesetzt. Es hat sich gezeigt, dass in Abhängigkeit von der Laugenkonzentration eine Reduzierung des genuinen DNA-Gehaltes der Gewebematrix bis zu 80 % (bei 0,1N Lauge) bzw. bis zu 100 % bei Verwendung von 1N Lauge erreicht werden kann.
Im letzten Schritt wird nach der Neutralisation die Matrix schonend getrocknet, indem das Wasser aus der Matrix azeotrop entfernt wird und zwar durch mehrmaliges Spülen mit einem organischen, mit Wasser mischbaren Lösungsmittel, z.B. Ethanol, Methanol, Propanol, Aceton. Erfindungsgemäß bevorzugt wird Ethanol verwendet. Dieser Schritt der Lösungsmittelkonservierung von Gewebe ist ein bekanntes Verfahren, das z.B. in DE 29 06 650 beschrieben ist.

Durch die kombinierte Verwendung von H₂O₂ und Lauge im Rahmen der Gewebematrixkonservierung wird die Dezellularisierung der Matrix und eine völlige Eliminierung der Matrix-DNA und infektiöser Partikel erreicht. Insbesondere wird durch das erfindungsgemäße Verfahren der Gewebekonservierung eine Matrix erhalten, deren biomechanische Stabilität und Gewebestruktur nach Rehydratisierung weitgehend unverändert ist, so dass ein aus dieser Matrix hergestelltes Transplantat in vivo gut gewebeverträglich ist und im Körper teilweise oder vollständig remodelliert wird, d.h. in körpereigenes Gewebe umgebaut wird.

Ein ganz besonderer Vorteil der erfindungsgemäß hergestellten Gewebematrix ist der, dass bei der Besiedelung mit autologen Zellen teilweise bzw. ganz auf den Einsatz von die Zelladhärenz fördernden Komponenten, wie z.B. Fibrin, Fibrinogen oder autologem Serum, verzichtet werden kann. Dies verbilligt und vereinfacht die Herstellung autologer Transplantate außerordentlich. Zudem ist die Gewinnung des autologen Serums in bestimmten Fällen, z.B. bei Herzpatienten, problematisch, da für die Gewinnung des Serums größere Volumina an Blut von diesen per se geschwächten Patienten entnommen werden müssen.

Gegenstand der Erfindung ist auch die Verwendung der erfindungsgemäß hergestellten, konservierten Gewebematrix zur Herstellung eines für den Empfänger autologen Transplantats durch Rehydratisierung der Matrix und Besiedelung dieser mit empfängerspezifischen Zellen, wobei mehrere verschiedene Zelltypen Verwendung finden können, z.B. Endothel-, Epithel- und/oder Muskelzellen zur Beschichtung eines Blutgefäßes, beispielsweise Muskelzellen und Endothelzellen. Es ist die Kombination mehrerer übereinander liegender Zellarten möglich. Sollen mehrere Zellschichten aufgebracht werden, so empfiehlt sich allerdings eine vorherige Beschichtung der Matrix mit Zelladhärenz fördernden Mitteln, wobei die benötigte Menge auf Grund der Art der Matrixkonservierung gering ist.

Die zur Besiedelung (der für den Empfänger allogenen oder xenogenen erfindungsgemäß hergestellten Gewebematrix) benötigten autologen Zellen werden aus Gewebebiopsaten entnommen, die identische bzw. ähnliche strukturelle und metabolische Eigenschaften aufweisen, wie die zu ersetzende Gewebestruktur. Die nach Aufschluss des Gewebes erhaltenen Zellen werden in bekannter Weise kultiviert.
Die Expansion der Zellen auf die der jeweiligen zu besiedelnden Fläche entsprechende Anzahl erfolgt unter Verwendung der entsprechenden zellspezifischen Kulturmedien und gegebenenfalls unter Zugabe von autologem Serum.

Vor der Besiedelung wird die konservierte Gewebematrix vorzugsweise mit isotonischen Pufferlösungen rehydratisiert und anschließend gegebenenfalls in einer geeigneten Apparatur zur Besiedelung fixiert. Danach kann eine gleichmäßige Beschichtung der rehydratisierten Gewebematrix mit einem die Zelladhärenz fördernden Agenz vorgenommen werden. Erfindungsgemäß bevorzugt entfällt diese jedoch. Anschließend wird die Gewebematrix zur Beschichtung mit einer Zellsuspension, die eine definierte Anzahl autologer Zellen enthält, inkubiert, gegebenenfalls mehrmals. Danach erfolgt die zur Erreichung einer vollständig bedeckten Oberfläche notwendige Zellkultivierung in spezifischen Zellkulturmedien. Nach Abschluss der Zellkultivierung wird das Transplantat mit isotonischen Pufferlösungen gespült und anschließend in einer isotonischen Salzlösung versandfertig verpackt.

Aufgrund der vorteilhaften Eigenschaften der eingesetzten Gewebematrix sind die erfindungsgemäß hergestellten Transplantate, die ebenfalls Gegenstand der vorliegenden Erfindung sind, sehr gut zur Anwendung in der Bauch-, Thorax-, Gefäß- oder Herzchirurgie, in der Urologie oder Gynäkologie geeignet.

So kann z.B. im Falle eines Tumors des Magens das betroffene Areal durch ein mit Muskel- und Schleimhautzellen besiedeltes xenogenes Patch ersetzt werden.
Bei Luftröhrenteilresektionen kann z.B. der betroffene Abschnitt durch eine xenogene Luftröhre besiedelt mit autologen Epithelzellen ersetzt werden.
Bypassoperationen im peripheren und aorto-koronaren Bereich können mit Transplantaten bestehend aus allogenen Gefäßmatrices besiedelt mit autologen Endothelzellen durchgeführt werden.
Bei Entfernung der Harnblase kann als Ersatz ein gleichgroßes konserviertes Hohlorgan allogenen bzw. xenogenen Ursprungs besiedelt mit autologen Epithelzellen transplantiert werden.

Erfindungsgemäß ist es auch möglich, aus der konservierten Gewebematrix des Hohlorganes ein Patch herzustellen, indem das Hohlorgan, z.B. Blutgefäß, axial geschnitten wird. Dieses nun flächige Gewebestück kann nach Rehydratisierung und mit oder ohne Zellbesiedelung zur flächigen Abdeckung von Defekten im menschlichen oder tierischen Körper dienen.

Dies ist z.B. im Falle der Entfernung von Gehirntumoren und anschließender Duraplastik mit einem nicht mit Zellen besiedelten Patch der Fall.
Auch die Behandlung der Harninkontinenz durch unbesiedelte Patches im Rahmen einer Schlingenplastik ist denkbar.

In dem letztgenannten Fall könnten diese Pachtes ggf. mit autologen Fibroblasten besiedelt werden um eine schnellere Gewebeintegration zu erreichen.

### Ausführungsbeispiel:

Im folgenden Beispiel wird exemplarisch die Herstellung eines coronaren, mit autologen Endothelzellen beschichteten Blutgefäßes bestehend aus einer xenogenen Matrix beschrieben.:
a) Eine Vene von ca. 15 cm Länge und einem inneren Durchmesser von ca. 4 mm wird aus der Muskelmasse eines Schweines präpariert und anschließend manuell von anhaftendem Bindegewebe gereinigt. Das Lumen wird anschließend mehrmals mit einer Kochsalzlösung bis zur Blutfreiheit gespült. Anschließend folgt eine Spülung mit Salzlösungen, um die in der Matrix enthaltenen Zellen osmotisch zu zerstören. Darauf folgt eine Desantigenisierung mit Wasserstoffperoxidlösungen. Danach erfolgt eine einstündige Behandlung mit 0,1 n NaOH gefolgt von einer 15 min Neutralisation mit Essigsäure und Spülen mit gereinigtem Wasser.
   Die azeotrope Entfernung des Wassers aus der so erhaltenen Matrix erfolgt durch mehrmaliges Spülen mit Ethanol.
   Die so behandelte Matrix wird bis zu einem Gehalt von maximal 50 ppm Ethanol getrocknet und anschließend doppelt steril verpackt. Eine terminale Sterilisation kann mit Gamma-Strahlen und beispielsweise einer Dosis von 25 kGy erfolgen.
b) Die Gewinnung der autologen Endothelzellen erfolgt aus einer geeigneten Vene des Patienten. Durch mehrmaliges Spülen des Lumens mit Phosphatpufferlösung werden enthaltene Blutbestandteile entfernt. Daraufhin wird das Lumen der Vene mit Kollagenase P für ca. 20 min bei 37° C inkubiert. Die daraus erhaltene Spüllösung wird zentrifugiert, der Überstand verworfen und der erhaltene Zellpellet in einem für Endothelzellen geeigneten Zellkulturmedium, z B. Endomed® resuspendiert. Anschließend wird diese Zellsuspension in eine 25 cm² Zellkulturflasche ausgesät.
c) Die Kultivierung der Endothelzellen erfolgt für ca. 24 Tage bei 37° C, 95 % rel. Luftfeuchte und 5 % CO₂. Dabei erfolgen zwei Passagen mit der Überführung in 75 cm² anschließend 225 cm² Zellkulturflaschen.
d) Die konservierte Schweinevene wird durch eine Schleuse in den Isolator verbracht und unter aseptischen Bedingungen mit 0,9 % NaCl-Lösung rehydratisiert. (Anschließend kann eine Beschichtung der Innenseite der Schweinevene mit Fibrinkleber oder autologem Serum erfolgen. Die Glättung der Fibrinkleber- bzw. Serumschicht kann mit einem Fogarty-Katheter erfolgen.)
   Anschließend wird die so vorbehandelte Schweinevene mit 0,9 %iger NaCl-Lösung gespült. Darauf folgt die Füllung des Lumens mit Endomed® Endothelzellmedium, in das eine definierte Anzahl Endothelzellen suspendiert wurde. Der Verschluss der beiden Venenenden erfolgt mittels Federklemmen. Nun wird die so behandelte Matrix in eine mit Endomed®-Medium gefüllte Petrischale gegeben und ca. 45 - 75 Minuten inkubiert.
   Anschließend erfolgt die Überführung in eine Zellkulturflasche und eine Kultivierung ohne Mediumwechsel bei 37°C für 5 - 9 Tage.
e) Nachdem die Schweinevene vollständig mit Endothelzellen besiedelt ist, wird das Endomed®-Medium abgezogen, die Schweinevene mit sterilem Phosphatpuffer gespült und anschließend mit 0,9 %iger NaCl-Lösung gefüllt.
   Der Transport zum Arzt erfolgt in einer Sterilverpackung in 0,9 %iger NaCl-Lösung bei 2-8 °C mittels Kühlkette.

## Patentansprüche

1. Verfahren zur Herstellung einer konservierten Gewebematrix eines Hohlorgans,
**dadurch gekennzeichnet, dass**
eine dem menschlichen oder tierischen Körper entnommene Gewebematrix eines Hohlorganes nach gegebenenfalls mechanischer Entfernung von anhaftendem Stütz-, Binde- oder Fettgewebe einer osmotischen Behandlung durch mehrmaliges Spülen mit wässrigen Salzlösungen unterzogen wird, die Gewebematrix durch mehrmaliges Spülen mit wässrigen Wasserstoffperoxidlösungen desantigenisiert wird, die Matrix anschließend mit Lauge behandelt und neutralisiert wird, das Wasser der Matrix azeotrop durch mehrmaliges Spülen mit einem organischen, mit Wasser mischbaren Lösungsmittel entfernt wird und die lösungsmittelfeuchte Matrix getrocknet wird.

2. Verfahren nach Anspruch 1,
**dadurch gekennzeichnet, dass**
als Salzlösungen zur osmotischen Behandlung 5 bis 15 %ige Lösungen verwendet werden, vorzugsweise Natriumchloridlösungen.

3. Verfahren nach Anspruch 1,
**dadurch gekennzeichnet, dass**
3-10 %ige H₂O₂-Lösungen verwendet werden.

4. Verfahren nach Anspruch 1,
**dadurch gekennzeichnet, dass**
als Lauge eine 0,1-1N Lauge, vorzugsweise NaOH oder KOH, verwendet wird.

5. Verfahren nach Anspruch 1,
**dadurch gekennzeichnet, dass**
als organisches Lösungsmittel Ethanol verwendet wird.

6. Verfahren nach Anspruch 1,
**dadurch gekennzeichnet, dass**
die konservierte Gewebematrix eines Blutgefäßes hergestellt wird, vorzugsweise einer Arterie oder Vene.

7. Verfahren nach Anspruch 1,
**dadurch gekennzeichnet, dass**
aus der konservierten Gewebematrix des Blutgefäßes durch axiales Schneiden ein Patch hergestellt wird.

8. Verwendung einer nach den Ansprüchen 1 bis 7 hergestellten konservierten Gewebematrix zur Herstellung eines für den Empfänger autologen Transplantats durch Rehydratisierung der Matrix und Besiedelung dieser mit empfängerspezifischen Zellen.

9. Verwendung einer nach den Ansprüchen 1 bis 7 hergestellten konservierten autologen Gewebematrix zur Herstellung eines Patches zur flächigen Abdeckung von Defekten im menschlichen oder tierischen Körper.

10. Verfahren zur Herstellung eines für den Empfänger autologen Transplantats durch Besiedelung einer autologen, allogenen oder xenogenen Gewebematrix mit empfängerspezifischen Zellen,
**dadurch gekennzeichnet, dass**
eine nach den Ansprüchen 1 bis 7 hergestellte konservierte Gewebematrix eingesetzt wird, diese rehydratisiert und in bekannter Weise mit einer Suspension von empfängerspezifischen Zellen in einem Zellkulturmedium inkubiert und bis zum Erreichen einer mit Zellen vollständig bedeckten Oberfläche kultiviert wird.

11. Verfahren nach Anspruch 10,
**dadurch gekennzeichnet, dass**
die konservierte Gewebematrix eines Blutgefäßes, vorzugsweise einer Arterie oder Vene, eingesetzt wird.

12. Verfahren nach Anspruch 10,
**dadurch gekennzeichnet, dass**
die konservierte Gewebematrix eines axial geschnittenen Blutgefäßes (Patch) eingesetzt wird.

13. Verfahren nach Anspruch 10,
**dadurch gekennzeichnet, dass**
die konservierte Gewebematrix nach ihrer Rehydratisierung und vor ihrer Beschichtung mit Zellen mit zelladhäsionsvermittelnden Agenzien, vorzugsweise Fibrin, Fibrinogen oder autologem Serum, beschichtet wird.

14. Verfahren nach Anspruch 10,
**dadurch gekennzeichnet, dass**
die Gewebematrix mit Endothel-, Epithel- und/oder Muskelzellen des Empfängers besiedelt wird.

15. Verwendung einer nach den Ansprüchen 10 bis 14 hergestellten konservierten Gewebematrix zur Herstellung eines autologen Transplantates für die Bauch-, Thorax-, Gefäß- oder Herzchirurgie, Urologie oder Gynäkologie.

## Claims

1. A method for the production of a preserved tissue matrix of a hollow organ,
**characterized in that**
a hollow organ tissue matrix collected from a human or animal body, subsequent to optional mechanical removal of adherent supporting, connective or fat tissue, is subjected to an osmotic treatment by repeated washings with aqueous salt solutions, the tissue matrix is deantigenated by repeated washings with aqueous hydrogen peroxide solutions, the matrix is subsequently treated with an alkaline solution and neutralized, the water in the matrix is removed azeotropically by repeated washings with an organic, water-miscible solvent, and the solvent-wet matrix is dried.

2. The method according to claim 1,
**characterized in that**
5 to 15% solutions, preferably sodium chloride solutions, are used as salt solutions in the osmotic treatment.

3. The method according to claim 1,
**characterized in that**
3-10% H₂O₂ solutions are used.

4. The method according to claim 1,
**characterized in that**
a 0.1-1 N alkaline solution, preferably NaOH or KOH, is used as alkaline solution.

5. The method according to claim 1,
**characterized in that**
ethanol is used as organic solvent.

6. The method according to claim 1,
**characterized in that**
a preserved tissue matrix of a blood vessel is produced, preferably of an artery or vein.

7. The method according to claim 1,
**characterized in that**
a patch is produced from the preserved blood vessel tissue matrix by axial dissection.

8. Use of a preserved tissue matrix produced according to claims 1 to 7 for the production of a recipient-autologous graft by rehydration of the matrix and colonization thereof with recipient-specific cells.

9. Use of a preserved autologous tissue matrix produced according to claims 1 to 7 for the production of a patch as a flat cover on defects in a human or animal body.

10. A method for the production of a recipient-autologous graft by colonization of an autologous, allogenic or xenogenic tissue matrix with recipient-specific cells,
**characterized in that**
a preserved tissue matrix produced according to claims 1 to 7 is used, which matrix is rehydrated, incubated with a suspension of recipient-specific cells in a cell culture medium in a well-known fashion, and cultured to achieve a surface completely coated with cells.

11. The method according to claim 10,
**characterized in that**
a preserved tissue matrix of a blood vessel is used, preferably of an artery or vein.

12. The method according to claim 10,
**characterized in that**
a preserved tissue matrix of an axially dissected blood vessel (patch) is used.

13. The method according to claim 10,
**characterized in that**
the preserved tissue matrix, subsequent to rehydration and prior to coating thereof with cells, is coated with cell adhesion-mediating agents, preferably with fibrin, fibrinogen or autologous serum.

14. The method according to claim 10,
**characterized in that**
the tissue matrix is colonized with endothelial, epithelial and/or muscle cells from the recipient.

15. Use of a preserved tissue matrix produced according to claims 10 to 14 for the production of an autologous graft for abdominal, thoracic, vascular or cardiac surgery, for urology or gynecology.

## Revendications

1. Procédé de préparation d'une matrice de tissu conservée d'un organe creux,
**caractérisé en ce**
**qu'**on soumet une matrice de tissu d'un organe creux prélevée dans le corps humain ou animal, après éventuellement un enlèvement mécanique de tissu de soutien, de tissu conjonctif ou de tissu adipeux adhérent, à un traitement osmotique par lavage en plusieurs fois dans des solutions salines aqueuses, on désantigénise la matrice de tissu par un lavage en plusieurs fois dans des solutions aqueuses de peroxyde d'hydrogène, on traite ensuite la matrice avec de la lessive alcaline et on neutralise, on enlève l'eau de la matrice de manière azéotrope par lavage plusieurs fois avec un solvant organique miscible à l'eau et on sèche la matrice humidifiée au solvant.

2. Procédé selon la revendication 1,
**caractérisé en ce**
**qu'**en tant que solutions salines pour le traitement osmotique, on utilise des solutions de 5 à 15 %, de préférence des solutions de chlorure de sodium.

3. Procédé selon la revendication 1,
**caractérisé en ce**
**qu'**on utilise des solutions d'H₂O₂ à 3-10 %.

4. Procédé selon la revendication 1,
**caractérisé en ce**
**qu'**en tant que lessive alcaline, on utilise une lessive alcaline de 0,1 à 1 N, de préférence du NaOH ou KOH.

5. Procédé selon la revendication 1,
**caractérisé en ce**
**qu'**en tant que solvant organique, on utilise de l'éthanol.

6. Procédé selon la revendication 1,
**caractérisé en ce**
**qu'**on prépare la matrice de tissu conservée d'un vaisseau sanguin, de préférence d'une artère ou d'une veine.

7. Procédé selon la revendication 1,
**caractérisé en ce**
**qu'**on prépare à partir de la matrice de tissu conservée du vaisseau sanguin, par découpe axiale, un patch.

8. Utilisation d'une matrice de tissu conservée préparée selon les revendications 1 à 7 pour préparer un greffon autologue pour le receveur par réhydratation de la matrice et colonisation de celle-ci avec des cellules spécifiques du receveur.

9. Utilisation d'une matrice de tissu autologue conservée préparée selon les revendications 1 à 7 pour préparer un patch destiné à un recouvrement plan des défauts dans le corps humain ou animal.

10. Procédé de préparation d'un greffon autologue pour un receveur par colonisation d'une matrice de tissu autologue, allogène ou xénogène avec des cellules spécifiques du receveur,
**caractérisé en ce**
**qu'**on utilise une matrice de tissu conservée préparée selon les revendications 1 à 7, on réhydrate celle-ci et on l'incube de manière connue avec une suspension de cellules spécifiques du receveur dans un milieu de culture cellulaire et on cultive les cellules jusqu'à obtenir une surface complètement recouverte de cellules.

11. Procédé selon la revendication 10,
**caractérisé en ce**
**qu'**on utilise la matrice de tissu conservée d'un vaisseau sanguin, de préférence d'une artère ou d'une veine.

12. Procédé selon la revendication 10,
**caractérisé en ce**
**qu'**on utilise la matrice de tissu conservée d'un vaisseau sanguin découpé en axial (patch).

13. Procédé selon la revendication 10,
**caractérisé en ce**
**qu'**on recouvre la matrice de tissu conservée après sa réhydratation et avant le recouvrement avec des cellules, avec des agents distribuant l'adhésion des cellules, de préférence de la fibrine, un fibrinogène ou un sérum autologue.

14. Procédé selon la revendication 10,
**caractérisé en ce**
**qu'**on colonise la matrice avec des cellules endothéliales, épithéliales et/ou musculaires du receveur.

15. Utilisation d'une matrice de tissu conservée, préparée selon les revendications 10 à 14, pour préparer un greffon autologue destiné à la chirurgie de l'abdomen, du thorax, la chirurgie vasculaire ou cardiaque, l'urologie ou la gynécologie.
